# EUROPEAN PATENT SPECIFICATION

(11) **EP 3 493 222 B1**
(45) Date of publication and mention of the grant of the patent: **11.11.2020**
(21) Application number: 18209236.1
(22) Date of filing: 29.11.2018
(51) Int. Cl.: H01B 1/24, H01B 1/12, C08L 65/00, C08L 97/00, C08L 97/02

(54) **MANUFACTURING OF A CONDUCTIVE SHEET**
HERSTELLUNG EINER LEITFÄHIGEN FOLIE
FABRICATION D'UNE FEUILLE CONDUCTRICE

(30) Priority: 29.11.2017 EP 17204433; 21.03.2018 EP 18163004
(43) Date of publication of application: 05.06.2019
(73) Proprietor: RISE Research Institutes of Sweden AB, 501 15 Borås (SE)
(72) Inventor: CRISPIN, Xavier, 610 20 KIMSTAD (SE); GRIMOLDI, Andrea, 21041 ALBIZZATE (IT); AHMED, Fareed, 602 47 NORRKÖPING (SE)
(74) Representative: AWA Sweden AB

(56) References cited:
- WO-A1-2009/101985
- US-A- 4 606 790
- US-B1- 8 764 938
- Bioresources Com ET AL: "PEER-REVIEWED ARTICLE PREPARATION AND CHARACTERIZATION OF CONDUCTIVE PAPER VIA IN SITU POLYMERIZATION OF 3,4-ETHYLENEDIOXYTHIOPHENE", BioResources, 1 January 2011 (2011-01-01), pages 3410-3423, XP055512473, Retrieved from the Internet: URL:http://ojs.cnr.ncsu.edu/index.php/BioR es/article/view/BioRes_05_1_0303_Ding_QSA_ Prep_Char_Conductive_Paper_Pyrrole/529 [retrieved on 2018-10-04]
- HIROTSUGU KAWASHIMA ET AL: "Fabrication of conductive paper coated with PEDOT: preparation and characterization", JOURNAL OF COATINGS TECHNOLOGY AND RESEARCH, SPRINGER US, BOSTON, vol. 9, no. 4, 8 November 2011 (2011-11-08), pages 467-474, XP035071718, ISSN: 1935-3804, DOI: 10.1007/S11998-011-9375-5

## Description

### Technical field

The present application relates to a method for manufacturing a conductive sheet and to a conductive sheet. The present application also relates to use of such a conductive sheet and to an electronic device comprising such a conductive sheet.

### Background art

Conductive paper is a highly interesting alternative as an electrode in for example energy conversion and energy storage applications, since it may be used in flexible electronics such as electrolysers, fuel cells, solar cells, batteries, super-capacitors and thermoelectrics.

A key step in paper production is the removal of water from a suspension comprising water and cellulose fibres, i.e. from the papermaking pulp. Water is normally drained off from the fibre suspension through a wire cloth, on top of which the paper web is formed. When producing conductive paper, an electron conductive polymer, or a precursor thereof, is typically provided to the fibre suspension. In the context of conductive paper, the term "paper" is illustrative for a flexible web structure and does not require the presence of cellulose fibres.

WO 2012/041714 A1 discloses a cellulose material consisting of cellulosic fibres which have been provided with impregnation. The impregnation of the cellulosic fibres includes electrically conductive polymers. The impregnated cellulose material is manufactured by combination of cellulose fibres with an aqueous electrolyte of a positively charged ionomer and a negatively charged ionomer, removal of water and subsequent crosslinking of the ionomers.

US 8,764,938 B1 provides a method for making smart paper and smart microfibers by means of nanotechnology layer-by-layer techniques. The method comprises forming an aqueous pulp of lignocellulose fibers and nanocoating it by alternatively adsorbing onto the fibers multiple consecutively-applied layers of organized ultra thin and oppositely-charged polyelectrolytes, at least one of which is an electrically conductive polymer or nanoparticle, and another one of which has a charge opposite of said electrically conductive polymer or nanoparticle, thereby making a modified aqueous pulp of electrically conductive multi-layer nanocoated lignocellulose fibers; then draining the water out of the modified aqueous pulp to form sheets of smart microfibers.

Conductive paper wherein the cellulose fibers thereof are coated in a hydrophilic electron conducting polymer are known from, *inter alia:* Y. Chen et al., Bioresources, 2011, 6(3), 3410; H. Kawashima et al., J. Coat. Technol. Res., 2012, 9(4), 467; WO 2009/101985.

There is a remaining desire to produce conductive paper in a simple manner at large scale and low cost. Therefore, there is a need to improve the methods currently used within the art.

### Summary of the invention

It is an object of the present invention to improve the current state of the art and to comply with the above-mentioned desire. It is another object of the present invention to manufacture conductive paper so that a sufficient amount of electron conductive polymer remains with the paper web rather than escaping the papermaking suspension with the water drained off through the wire cloth. These and other objects are achieved by the method, the devices, and the use according to the appended claims.

According to a first aspect of the present invention a method for manufacturing a conductive sheet is provided. The method comprises the steps of
- providing microparticles comprising a hydrophilic electron conducting polymer;
- providing a fibrous material comprising a hydrophilic fibre;
- forming a liquid composition comprising the microparticles and the fibrous material; and
- draining liquid from the liquid composition, thereby forming a conductive layer comprising the electron conducting polymer and the fibrous material.

Methods for providing microparticles comprising an electron conducting polymer are known in the art. It is for example explained by Z. Li et al. (Angew. Chem. Int. Ed. 2016, 55, 979) that treatment of an aqueous suspension of PEDOT:PSS with sulfuric acid will remove the PSS charging agents of the nanoparticles in the suspension, leading to aggregation of PEDOT and formation of PEDOT microparticles. It is contemplated that also treatment with other acids, such as hydrochloric acid or acetic acid, or substitution of the PSS with small anions by acid treatment or by other means, such as by treatment with an ionic liquid, such as 1-ethyl-3-methylimidazolium ethyl sulfate (EMIM-ES), will lead to formation of PEDOT microparticles. In the case of treatment with acid, it has been found that the concentration of the acid may affect the kinetics of formation of microparticles. Treatment with 1 M H₂SO₄ has been proposed. It is furthermore contemplated that similar treatments may be applied to other p-doped electron conducting polymers, such as polyaniline, polythiophene, polypyrrole, polyphenylenevinylene or polyfuran, that are stabilised with a polyanionic polymer, resulting in formation of microparticles of the electron conducting polymer in question.

Microparticles comprising an electron conducting polymer may alternatively be provided by the method disclosed in EP 17204433.1. This method comprises the steps of:
- providing a composition comprising:
   - lignosulfonate
   - fibers comprising polysaccharides, and
   - monomers and/or oligomers capable of forming an electron conducting polymer;
- polymerizing in said composition said monomers and/or oligomers capable of forming an electron conducting polymer to said electron conducting polymer, thereby forming particles, which particles comprise lignosulfonate, fibers comprising polysaccharides, and said electron conducting polymer.

The step of providing the microparticles may optionally include concentration of the microparticles before the formation of the liquid composition comprising the microparticles and the fibrous material.

The term "microparticles" may herein refer to particles between 1 and 300 µm in size.

The conductive sheet may be a self-standing sheet, e.g. it may be a self-supporting sheet. Stated differently, said conductive sheet may be a free-standing sheet. With "self-supporting" or "free-standing" is referred to that the conductive sheet may be mainained without support.

The term "fibrous material" herein refers to a material comprising fibres. A fibre is a natural or synthetic substance that is significantly longer than it is wide.

The term "hydrophilic fibre" herein refers to a fibre comprising a hydrophilic surface.

The step of providing a fibrous material comprising a hydrophilic fibre may include providing a fibrous material comprising inherently hydrophilic fibres. Examples of inherently hydrophilic fibres include cellulose fibres. The term "inherently hydrophilic" herein refers to that the fibres does not require any treatment to render them hydrophilic.

Alternatively, the step of providing a fibrous material comprising a hydrophilic fibre includes providing a fibrous material comprising fibres, wherein the step of providing comprises a treatment of the fibrous material rendering the fibres hydrophilic. The treatment may be an acid treatment. Other suitable treatments include the use of an adhesion promotor based on surfactant molecules including a coupling agent such as carboxilic-based coupling agent, silane-based coupling agent, thiol-based coupling agent, titanates coupling agents and zirconates-based coupling agents.

Examples of fibres that may require a treatment, preferably an acid treatment, to render them hydrophilic include carbon fibres, metal fibres and metal oxide fibres.

The treatment may be performed as a pre-treatment step, before the liquid composition is formed. This may be advantageous when the microparticles have been provided using an ionic liquid.

Alternatively or additionally, the treatment may be performed during the step of forming the liquid composition. Depending on how the microparticles were provided, the liquid composition may further comprise an acid capable of rendering the fibres hydrophilic.

In one embodiment, microparticles comprising PEDOT are used together with cellulose fibres to form the liquid composition. An optional step of treating the cellulose fibres to further increase their hydrophilicity may be used. Such treatment may be inherent in the step of forming the liquid composition, if the microparticles comprising PEDOT has been provided by use of an acid.

In one embodiment, microparticles comprising PEDOT, wherein the microparticles have been provided by use of an acid, are used together with carbon fibres to form the liquid composition comprising PEDOT, carbon fibres and acid. The step of providing the hydrophilic fibrous material comprises a treatment of the carbon fibres with the acid in the liquid composition to render them hydrophilic. The step of providing the carbon fibres may further comprise a step of pre-treatment with an acid, before the step of forming a liquid composition.

In one embodiment, microparticles comprising PEDOT, wherein the microparticles have been provided by use of an ionic liquid, are used together with carbon fibres to form the liquid composition. The step of providing the carbon fibres includes a pre-treatment with an acid to render them hydrophilic. The pre-treatment is performed before the step of forming the liquid composition.

Draining of the liquid, as compared to, e.g., evaporation of the liquid, from the liquid composition allows for quicker formation of the conductive layer. The liquid may be drained from the liquid composition through a filter. The filter may be a wire cloth, preferably a wire of a papermaking machine. Suitable techniques for disposing the liquid composition on a filter are well known in the art of conventional papermaking. It is contemplated that the fibrous material counteracts so-called dead-end filtration, a phenomenon involving blockage of filter openings by big particles, thereby facilitating draining of liquid from the liquid composition and accelerating formation of the conductive layer

The fibrous material may be electron conducting. An electron conducting fibrous material not only contributes to the formation of a layer as explained above, but also contributes to the conductivity of the sheet. Alternatively, the fibrous material may be non-conducting.

The fibrous material may comprise electron conducting fibres, such as carbon, Cu, Ti, Ni, steel, and/or stainless steel fibres, preferably carbon fibres. Electron conducting fibres not only contribute to the formation of a sheet as explained above, but also contribute to the conductivity of the sheet. In the manufacture of a conducting sheet it may thus be preferred that the fibrous material consists essentially of electron conducting fibres, such as carbon, Cu, Ti, Ni, steel, and/or stainless steel fibres, preferably carbon fibres.

The conducting fibres may further be electrocatalytic fibres. Electrocatalytic fibres catalyses an electrochemical reaction. Electrocatalytic fibres may be useful in fuel cell or electrolyser applications.

In one embodiment, microparticles comprising PEDOT and lignosulfate are used together with carbon fibres to form the liquid composition.

Additionally, or alternatively, the fibrous material may comprise non-conducting fibres. Non-conducting fibres contribute to the formation of a sheet as explained above. A combination of conducting and non-conducting fibres may thus turn out as preferred in the manufacture of a conducting sheet. The electron conducting polymer may provide a desirable conductivity to the sheet. In the manufacture of a conducting sheet it may thus be preferred that the fibrous material consists essentially of non-conducting fibres. An example of non-conducting fibres is polysaccharide fibres. Polysaccharide fibres may originate from a natural source, e.g. a tree or another type of plant. Polysaccharide fibres may for example be fibres comprising structural polysaccharides, e.g. cellulose, arabinoxylans, chitin or pectin. Alternatively, polysaccharide fibers may be fibres comprising storage polysaccharides, e.g. starch or glycogen.

The fibrous material may comprise cellulose fibres, such as cellulose pulp, wood pulp, papermaking pulp or microfibrillated cellulose (MFC). Cellulose fibers, in particular MFC, may contribute to the formation of a uniform dispersion of the microparticles, without precipitation and/or with a high conductivity, suitable for the manufacturing of conductive paper.

As explained above in the terms of non-conducting fibres, a combination of conducting fibres, such as carbon fibres, and cellulose fibres, such as cellulose pulp, wood pulp, papermaking pulp or microfibrillated cellulose (MFC), may be preferred in the manufacture of a conducting sheet. In one embodiment a combination of cellulose pulp and carbon fibres is used. In the manufacture of a conducting sheet it may alternatively be preferred that the fibrous material consists essentially of cellulose fibres, such as cellulose pulp, wood pulp, papermaking pulp or microfibrillated cellulose (MFC).

The fibres of the fibrous material may have a diameter of at least 1 µm and preferably in the range of 1 to 100 µm, more preferably in the range of 1 to 50 µm or 1 to 10 µm. The fibres of the fibrous material may have an aspect ratio between length and diameter in the range of 10¹ to 10⁶, preferably 10² to 10⁴. The length may typically be in the range of 100 µm to 3 cm, preferably 1 mm to 1 cm. It is contemplated that fibres of such diameter and/or length, particularly diameter, provides a preferred porosity to the liquid composition when drained, thereby in a preferred manner counteracting dead-end filtration phenomena and accelerating formation of the conductive layer. The porosity also ensures, during manufacture of the conductive sheet, a large surface of the sheet, being advantageous for the function of the sheet as an electrode together with an electrolyte in any chemical device.

The liquid composition may further comprise nanofibres. It is contemplated that the nanofibres contribute to the mechanical strength of the conductive sheet by increasing the interaction between the microparticles comprising an electron conducting polymer and the fibrous material. The nanofibres may be electron conducting nanofibres, such as carbon, Cu, Ti, Ni, steel and/or stainless steel nanofibres or carbon nanotubes.

The electron conducting nanofibres may further be electrocatalytic. Such electrocatalytic nanofibres may be used in combination with a fibrous material comprising carbon fibres. In such combination the carbon fibres act as *in situ* current collectors.

The nanofibres may alternatively be non-conducting nanofibres, such as polysaccharide nanofibres, preferably cellulose nanofibres, such as nanofibrillated cellulose (NFC). The non-conducting nanofibres may also be TiO₂ or WOₓ nanofibres. Cellulose fibres, in particular NFC, form sheet structures of high mechanical quality. Cellulose fibers, in particular NFC, may furthermore contribute to the formation of a uniform dispersion of the microparticles, without precipitation and/or with a high conductivity, suitable for the manufacturing of conductive paper.

A combination of conducting nanofibres, such as carbon fibres, and non-conducting nanofibres, such as cellulose fibres, may be preferred in the manufacture of a conducting sheet. In the manufacture of a conducting sheet it may alternatively be preferred that the nanofibres are essentially cellulose fibres.

The nanofibres may have a diameter of no more than 1000 nm and preferably in the range of 10 to 1000 nm, more preferably in the range of 10 to 100 nm. The nanofibers may have a length in the range of 10 to 10000 µm, preferably 10 to 1000 µm.

Depending on the materials used, surface treatments of the fibres may be preferred in order to improve adaptation to the chemical nature of the microparticles comprising an electron conducting polymer. The electron conducting polymer often being hydrophilic, a treatment rendering the fibre surface hydrophilic may be preferred, such as acid treatment of carbon fibres.

The liquid composition may be an aqueous composition and the liquid drained from the liquid composition may comprise water. Additionally, or alternatively, the composition may comprise another solvent, e.g. an alcohol or DMSO. Depending on how the microparticles were provided, the liquid composition may further comprise, e.g., an acid and/or an ionic liquid.

The liquid may be drained from the liquid composition through a filter having an opening size of 10 to 1000 µm, preferably up to 100 to 1000 µm, more preferably 100 to 500 µm or 500 to 1000 µm, the filter optionally being a wire cloth, preferably a wire of a papermaking machine. It is contemplated that the combined presence of microparticles and fibrous material promotes retention of the electron conducting polymer also at large opening sizes. Hence, the conductive layer may be manufactured in a conventional papermaking process.

It is also contemplated that the combined presence of microparticles comprising a hydrophilic electron conducting polymer, and a fibrous material comprising hydrophilic fibres provides an interaction between the microparticles and the fibrous material through electrostatic interactions (e.g. ionic-ionic, dipole-ion, dipole-dipole). Conducting polymers are hydrophilic in their conducting form. The electrostatic interactions promotes a good dispersion of fibres in the liquid composition with little phase separation. Thus, hydrophilic fibres interacting with nearby microparticles comprising hydrophilic electron conducting polymers retain the microparticles during draining, such as during draining using large opening sizes, in particular during draining using a wire of a papermaking machine.

The step of draining liquid from the liquid composition may be followed by drying of the conductive layer formed. Suitable drying techniques are well known in the art of conventional papermaking.

The microparticles may have an average particle size of larger than 10 µm, preferably larger than 50 µm, more preferably larger than 100 µm, and most preferably larger than 200 µm. Herein, when discussing the average particle size it should be understood that in average the particles may have at least one extension which is larger than 10 µm, preferably larger than 50 µm, more preferably larger than 100 µm, most preferably larger than 200 µm. The average particle size may be determined by optical methods, e.g. by dynamic light scattering.

The conductive layer may have a conductivity of at least 10 S/cm, preferably at least 20 S/cm, more preferably at least 50 S/cm, more preferably at least 100 S/cm, more preferably at least 200 S/cm, more preferably at least 300 S/cm, more preferably at least 500 S/cm, most preferably at least 700 S/cm. Optionally, the conductive layer may have a conductivity of no more than 1000 S/cm. Such conductivity may be obtained by combining the electron conducting polymer with an electron conducting fibrous material or a fibrous material comprising electron conducting fibres, such as carbon fibres, and preferably also with electron conducting nanofibres. A conductive layer having such conductivity may be useful in an electrocatalysis application. In such application, the specific capacitance may be lower than the values for specific capacitance mentioned below.

A post treatment of the conductive layer formed, or of the conductive sheet, may contribute towards said conductivity. For example, treating a film of PEDOT microparticles with concentrated H₂SO₄ increases conductivity to more than 300 S/cm within 100 hours.

The conductive layer may alternatively have a conductivity of at least 0.001 S/cm. For such alternative, the conductive layer may optionally have a conductivity of less than 10 S/cm. For such alternative, the conducting layer may be useful in a battery application. For such application, the specific capacitance may in the range of the specific capacitance values mentioned below.

The conductive layer may have a specific capacitance of at least 10 F/g, preferably at least 100 F/g, more preferably at least 300 F/g, more preferably at least 500 F/g, most preferably at least 700 F/g. Optionally, the conductive layer may have a specific capacitance of no more than 1000 F/g. Such specific capacitance may be obtained by using the electron conducting polymer in combination with a non-conducting fibrous material, such as a fibrous material comprising cellulose fibres. A conductive layer having such specific capacitance may be useful in a battery application. In such application, the conductivity may in the lower range of the conductivity values mentioned above.

Considering a conductive sheet intended for charge storage, nanofibres such as WOx and microfibres such as carbon may be used in combination with PEDOT microparticles.

The hydrophilic electron conducting polymer may be any electron conductive polymer or derivative or combination thereof, including but not limited to polyaniline, polythiophene, polypyrrole, polyphenylenevinylene, polyfuran and/or derivatives or combinations thereof. The electron conducting polymer may be poly(3,4-ethylenedioxythiophene) (PEDOT). PEDOT may be stabilized by polystyrene sulfonate (PSS), forming a stabilised form known as PEDOT:PSS. The electron conducting polymers are hydrophilic, at least in their electron conducting form.

The electron conducting polymer may have an electron conductivity of at least 10⁻⁵ S/m, or at least 10⁻³ S/m, or at least 10⁻¹ S/m, or at least 1 S/m, or at least 10 S/m, or at least 100 S/m.

The conductive layer may further comprise an electron conducting material. The electron conducting material is different from the electron conducting polymer and the fibrous material. The electron conducting material may, however, be defined as laid out above for the electron conducting polymer or the fibrous material. The electron conducting material may alternatively comprise carbon nanotubes.

The method may further comprise a step of forming an additional layer adjacent the conductive layer. The additional layer may be formed prior to formation of the conductive layer, so that the conductive layer is formed on top of the additional layer. The additional layer may be formed subsequent to formation of the conductive layer, so that the additional layer is formed on top of the conductive layer.

The additional layer may be formed by
- optionally providing microparticles of an electron conducting polymer;
- providing a fibrous material;
- forming a liquid composition comprising the microparticles, if provided, and the fibrous material; and
- draining liquid from the liquid composition; thereby forming an additional layer comprising the conducting polymer, if corresponding microparticles were provided, and the fibrous material.

The microparticles, the electron conducting polymer and the fibrous material of the additional layer may be similar to or different from the microparticles, the electron conducting polymer and the fibrous material of the conducting layer. The microparticles, the electron conducting polymer and the fibrous material of the additional layer may be defined as laid out above for the conductive layer. The additional layer may be defined as laid out above for the conductive layer.

According to a second aspect of the invention a conductive sheet is provided. The conductive sheet comprises a conductive layer, the conductive layer comprising a fibrous material and microparticles, the fibrous material comprising a hydrophilic fiber and the microparticles comprising a hydrophilic electron conducting polymer, preferably wherein the conductive layer, the electron conducting polymer and/or the fibrous material is defined as in the first aspect.

The conductive layer may be obtainable by the method according to the first aspect.

According to a third aspect of the invention use of a conductive sheet according to the second aspect is provided. The conductive sheet is used as an electrode.

The electrode may be an electrode for electrocatalysis or electrochemical reactions, preferably for fuel production or in fuel cell applications, or may be an electrode in a solar cell, fuel cell, electrolyser, battery, capacitor or super-capacitor.

Furthermore, the conductive layer, the conductive sheet or the electrode may be used in the field of thermoelectric devices, fuel cells, batteries, supercapacitors, sensors, water softening, water desalination, or removal of cations, such as heavy metal ions, from water.

According to a fourth aspect of the invention an electronic device is provided. The electronic device comprises a conductive sheet according to the second aspect.

The electronic device may be a solar cell, fuel cell, electrolyser, battery, capacitor or super-capacitor.

### Brief description of the drawings

The above objects, as well as additional objects, features and advantages of the present invention, will be more fully appreciated by reference to the following illustrative and non-limiting detailed description of embodiments of the present invention, when taken in conjunction with the accompanying drawings.
Fig. 1 is a schematic illustration of a method for manufacturing a conductive sheet in accordance with at least one embodiment of the invention.
Fig. 2 is a schematic illustration of a conductive sheet in accordance with at least one embodiment of the invention.
Fig. 3 illustrates results from Example 1.
Figs. 4a and 4b illustrate results from Example 2.
Figs. 5a and 5b illustrate results from Example 5.

### Detailed description of the drawings

In the present detailed description, embodiments of the present invention will be discussed with reference to the accompanying figures. It should be noted that such discussion by no means limits the scope of the invention. The invention is also applicable in other circumstances, for instance with other types or variants of filter arrangements encompassed by the scope of the claims than the embodiments shown in the accompanying drawings. Further, the mentioning of specific features in connection with an embodiment of the invention does not mean that such features cannot be used to an advantage together with other embodiments of the invention.

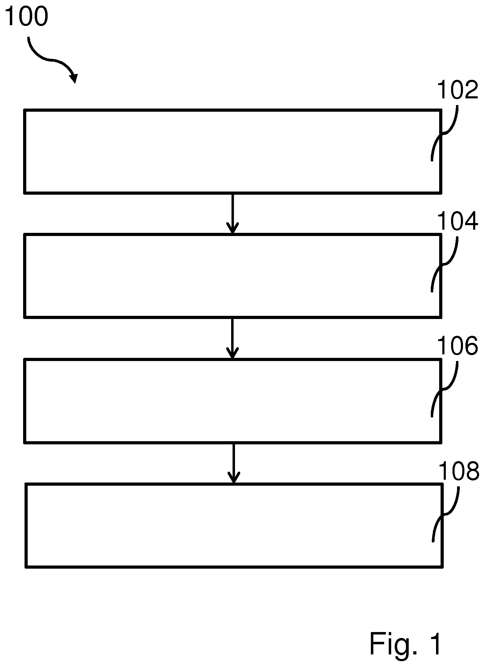

Fig. 1 is a schematic illustration of a method 100 for manufacturing a conductive sheet. The method 100 comprises four steps. In a first step 102 microparticles comprising a hydrophilic electron conducting polymer are provided. In a second step 104 a fibrous material comprising hydrophilic fibres is provided. In a third step 106 a liquid composition comprising the microparticles and the fibrous material is formed. In a fourth step 108 liquid is drained from the liquid composition. In the fourth step 108 a conductive layer comprising the electron conductive polymer and the fibrous material is formed.

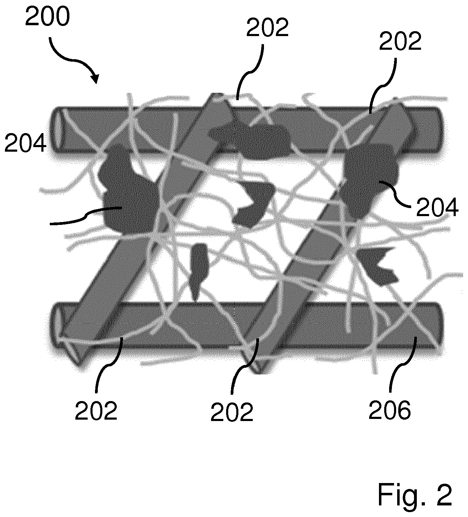

Fig. 2 is a schematic illustration of a conductive sheet 200. The conductive layer comprises a fibrous material 202, which in Fig. 2 is depicted as cellulose fibres. Further, the conductive layer 200 comprises microparticles 204 comprising an electron conductive polymer. Here, the conductive layer is arranged on a wire 206 of a papermaking machine (not shown).

### Example 1

A composition of PEDOT microparticles (composition "1 M") was provided by treating PEDOT:PSS with 1 M H₂SO₄ for 1 hour.

Liquid compositions comprising the PEDOT microparticles as well as nanofibrillated cellulose (composition "NFC") or cellulose pulp (composition "Pulp"), respectively, were formed. The amount of nanofibrillated cellulose or cellulose pulp, respectively, was 50 weight% based on the total dry weight of PEDOT and cellulose.

Conductive sheets were manufactured by draining liquid from the respective composition through the wire (opening size 150 µm) of a manual sheet forming apparatus mimicking a papermaking machine.

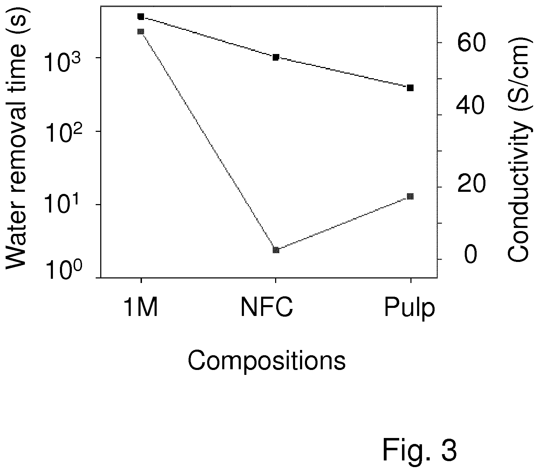

The time to remove 10 ml of funnel water was measured and is illustrated by the upper graph in Fig. 3. The conductivity of the conductive sheets was measured and is illustrated by the lower graph in Fig. 3.

### Example 2

A composition of PEDOT microparticles (composition "1M") was provided by treating PEDOT:PSS with 1 M H₂SO₄ for 1 hour.

Liquid compositions comprising the PEDOT microparticles as well as nanofibrillated cellulose (composition "NFC"), cellulose pulp (composition "Pulp") or isotropical pitch based carbon fibres (compositions "6", "10.8", "20.5" and "50"), respectively, were formed. The amount of nanofibrillated cellulose or cellulose pulp, respectively, was 50 weight% based on the total dry weight of PEDOT and cellulose. The amount of carbon fibres was 3 (composition "6"), 5 (composition "10.8"), 10 (composition "20.5") or 25 (composition "50") weight% based on the total dry weight of PEDOT and carbon fibre. The carbon fibres had a diameter of 13 µm and a length of 3.3 mm.

Conductive sheets were manufactured by draining liquid from the respective composition through the wire (opening size 150 µm) of a manual sheet forming apparatus mimicking a papermaking machine.

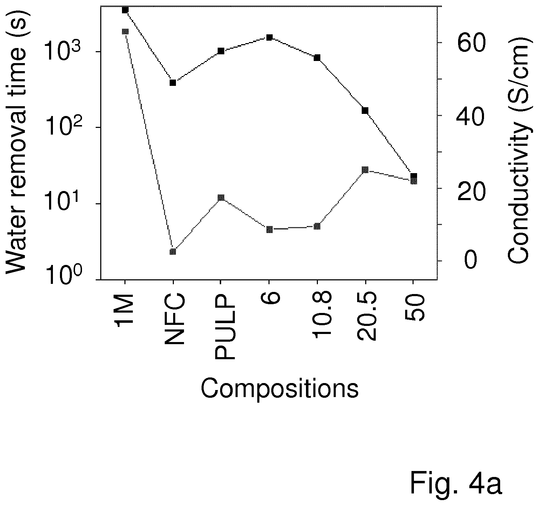

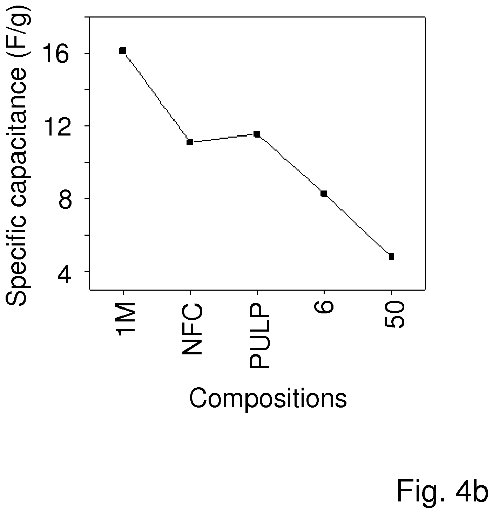

The time to remove 10 ml of funnel water was measured and is illustrated by the upper graph in Fig. 4a. The conductivity of the conductive sheets was measured and is illustrated by the lower graph in Fig. 4a. The specific capacitance of the conductive sheets was measured and is illustrated in Fig. 4b.

### Example 3

A composition of PEDOT microparticles was provided by treating 2.7 g/l PEDOT:PSS with 0.72 M H₂SO₄ for 1 hour. The average particle size obtained by dynamic light scattering (DLS) was 60-65 µm. Using DLS, it was observed that microparticles were formed very quickly and that exposure to acid during 1 to 18 hours did not substantially impact the particle size. Thus, 1 hour was thus selected as reference time.

### Example 4

A composition of PEDOT microparticles was provided by treating PEDOT:PSS with 1 M H₂SO₄ for 1 hour. The average conductivity was ∼63 S/cm. This conductivity could be further increased by post treatments. For example, treating a film of PEDOT microparticles with concentrated H₂SO₄ increases conductivity to more than 300 S/cm within 100 hours.

### Example 5

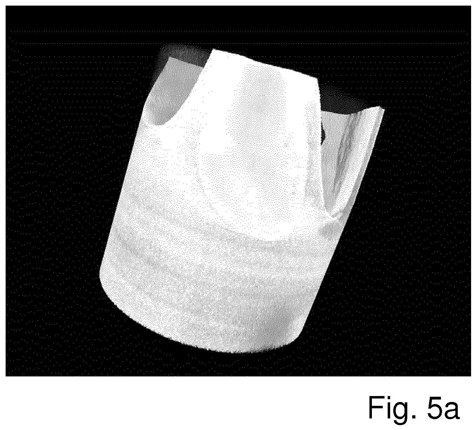

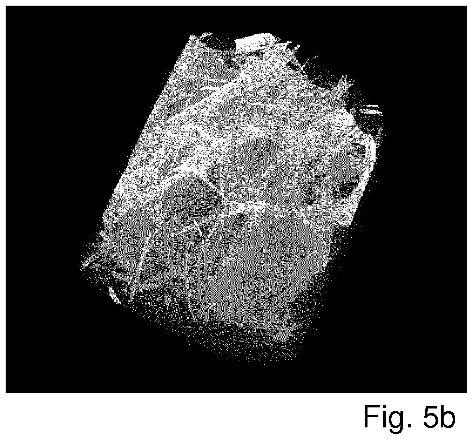

A reference sheet was manufactured by treating PEDOT:PSS with 1M H₂SO₄ for 1h at room temperature followed by direct filtration method, the gel formed was utilized to form a thick free-standing membranes (∼ 0-3 to 0.5 mm, on 0.2 mm wire mesh). The reference sheet and a conductive sheet, manufactured in a similar manner as sample "6" of Example 2, was subjected to a X-ray tomography. Figs. 5a and 5b show X-ray tomography images of the samples without and with pitch based carbon-fibers, respectively. In Fig. 5b, carbon fibers and composite membrane film are highlighted as white fibers and light transparent background image, respectively. The pitch based carbon fibers (diameter ∼ 7 um) form parallel, random channels internally within membranes. This leads to fast dewatering system without effecting electrical conductivity.

## Claims

1. A method for manufacturing a conductive sheet, the method comprising the steps of
- providing microparticles comprising a hydrophilic electron conducting polymer;
- providing a fibrous material comprising a hydrophilic fibre;
- forming a liquid composition comprising the microparticles and the fibrous material; and
- draining liquid from the liquid composition, thereby forming a conductive layer comprising the electron conducting polymer and the fibrous material.

2. The method according to claim 1, wherein the fibrous material is electron conducting.

3. The method according to claim 1 or 2, wherein the fibrous material comprises electron conducting fibres, such as carbon, Cu, Ti, Ni, steel, and/or stainless steel fibres, preferably carbon fibres.

4. The method according to any one of the preceding claims, wherein the fibrous material comprises cellulose fibres, such as cellulose pulp, wood pulp, papermaking pulp or microfibrillated cellulose.

5. The method according to any one of the preceding claims, wherein the liquid composition further comprises nanofibres.

6. The method according to any one of the preceding claims, wherein the liquid composition is an aqueous composition and the liquid drained from the liquid composition comprises water.

7. The method according to any one of the preceding claims, wherein the liquid is drained from the liquid composition through a filter having an opening size of 10 to 1000 µm, preferably 100 to 1000 µm, more preferably 100 to 500 µm or 500 to 1000 µm, the filter optionally being a wire cloth, preferably a wire of a papermaking machine.

8. The method according to any one of the preceding claims, wherein the microparticles have an average particle size of larger than 10 µm, preferably larger than 50 µm, more preferably larger than 100 µm, most preferably larger than 200 µm.

9. The method according to any one of the preceding claims, wherein the conductive layer has a conductivity of at least 10 S/cm, preferably at least 20 S/cm, more preferably at least 50 S/cm, more preferably at least 100 S/cm, more preferably at least 200 S/cm, more preferably at least 300 S/cm, more preferably at least 500 S/cm, most preferably at least 700 S/cm, and wherein optionally the conductive layer has a conductivity of no more than 1000 S/cm.

10. The method according to any one of the preceding claims, wherein the conductive layer has a specific capacitance of at least 10 F/g, preferably at least 100 F/g, more preferably at least 300 F/g, more preferably at least 500 F/g, most preferably at least 700 F/g, and wherein optionally the conductive layer has a specific capacitance of no more than 1000 F/g.

11. The method according to any one of the preceding claims, wherein the electron conducting polymer is polyaniline, polythiophene, polypyrrole, polyphenylenevinylene, polyfuran and/or derivatives or combinations thereof, preferably poly(3,4-ethylenedioxythiophene).

12. A conductive sheet comprising a conductive layer, the conductive layer comprising a fibrous material and microparticles, the fibrous material comprising a hydrophilic fibre and the microparticles comprising a hydrophilic electron conducting polymer, preferably wherein the conductive layer is defined as in any one of claims 9 to 10, the electron conducting polymer is defined as in claim 11, the microparticles are defined as in claim 8 and/or the fibrous material is defined as in any one of claims 2 to 4.

13. The conductive sheet according to claim 12, obtainable by the method according to any one of claims 1 to 11.

14. Use of a conductive sheet according to claim 12 or 13 as an electrode, preferably wherein the electrode is an electrode for electrocatalysis or electrochemical reactions, preferably for fuel production or in fuel cell applications, or is an electrode in a solar cell, fuel cell, electrolyser, battery, capacitor or super-capacitor.

15. An electronic device, such as a solar cell, fuel cell, electrolyser, battery, capacitor or super-capacitor, comprising a conductive sheet according to claim 12 or 13.

## Patentansprüche

1. Verfahren zur Herstellung einer leitfähigen Folie, wobei das Verfahren die Schritte umfasst
- Bereitstellen von Mikropartikeln, umfassend ein hydrophiles elektronenleitendes Polymer;
- Bereitstellen eines Fasermaterials, umfassend eine hydrophile Faser;
- Bilden einer flüssigen Zusammensetzung, umfassend die Mikropartikel und das Fasermaterial; und
- Abfließen von Flüssigkeit aus der flüssigen Zusammensetzung, wodurch eine leitende Schicht gebildet wird, umfassend das elektronenleitende Polymer und das Fasermaterial.

2. Verfahren nach Anspruch 1, wobei das Fasermaterial elektronenleitend ist.

3. Verfahren nach Anspruch 1 oder 2, wobei das Fasermaterial elektronenleitende Fasern wie Kohlenstoff-, Cu-, Ti-, Ni-, Stahl- und / oder Edelstahlfasern, vorzugsweise Kohlenstofffasern, umfasst.

4. Verfahren nach einem der vorhergehenden Ansprüche, wobei das Fasermaterial Cellulosefasern wie Cellulosepulpe, Holzpulpe, Papierherstellungspulpe oder mikrofibrillierte Cellulose umfasst.

5. Verfahren nach einem der vorhergehenden Ansprüche, wobei die flüssige Zusammensetzung ferner Nanofasern umfasst.

6. Verfahren nach einem der vorhergehenden Ansprüche, wobei die flüssige Zusammensetzung eine wässrige Zusammensetzung ist und die aus der flüssigen Zusammensetzung abgelassene Flüssigkeit Wasser umfasst.

7. Verfahren nach einem der vorhergehenden Ansprüche, wobei die Flüssigkeit aus der Flüssigkeitszusammensetzung durch einen Filter mit einer Öffnungsgröße von 10 bis 1000 µm, vorzugsweise 100 bis 1000 µm, bevorzugter 100 bis 500 µm oder 500 bis 1000 µm abgelassen wird, wobei der Filter gegebenenfalls ein Drahtgewebe ist, vorzugsweise ein Draht einer Papierherstellungsmaschine.

8. Verfahren nach einem der vorhergehenden Ansprüche, wobei die Mikropartikel eine durchschnittliche Partikelgröße von mehr als 10 µm, vorzugsweise größer als 50 µm, bevorzugter größer als 100 µm, am bevorzugtesten größer als 200 µm aufweisen.

9. Verfahren nach einem der vorhergehenden Ansprüche, wobei die leitende Schicht eine Leitfähigkeit von mindestens 10 S/cm, vorzugsweise mindestens 20 S/cm, bevorzugter mindestens 50 S/cm, bevorzugter mindestens 100 S/cm, bevorzugter mindestens 200 S/cm, bevorzugter mindestens 300 S/cm, bevorzugter mindestens 500 S/cm, am bevorzugtesten mindestens 700 S/cm aufweist, und wobei die leitende Schicht gegebenenfalls eine Leitfähigkeit von nicht mehr als 1000 S/cm aufweist.

10. Verfahren nach einem der vorhergehenden Ansprüche, wobei die leitende Schicht eine spezifische Kapazität von mindestens 10 F/g, vorzugsweise mindestens 100 F/g, bevorzugter mindestens 300 F/g, bevorzugter mindestens 500 F/g, am bevorzugtesten mindestens 700 F/g aufweist, und wobei die leitende Schicht gegebenenfalls eine spezifische Kapazität von nicht mehr als 1000 F/g aufweist.

11. Verfahren nach einem der vorhergehenden Ansprüche, wobei das elektronenleitende Polymer Polyanilin, Polythiophen, Polypyrrol, Polyphenylenvinylen, Polyfuran und / oder Derivate oder Kombinationen davon, vorzugsweise Poly (3,4-ethylendioxythiophen) ist.

12. Leitfähige Folie, umfassend eine leitende Schicht, wobei die leitende Schicht ein elektronenleitendes Polymer und ein Fasermaterial umfasst, wobei das Fasermaterial eine hydrophile Faser und die Mikropartikel umfasst, wobei die Mikropartikel ein hydrophiles elektronenleitendes Polymer umfassen, wobei vorzugsweise die leitende Schicht definiert ist nach einem der Ansprüche 9 bis 10, das elektronenleitende Polymer definiert ist nach Anspruch 11, die Mikropartikel definiert sind nach Anspruch 8 und/oder das Fasermaterial definiert ist nach einem der Ansprüche 2 bis 4.

13. Leitfähige Folie nach Anspruch 12, herstellbar nach dem Verfahren nach einem der Ansprüche 1 bis 11.

14. Verwendung einer leitfähigen Folie nach Anspruch 11 oder 12 als Elektrode, vorzugsweise wobei die Elektrode eine Elektrode für Elektrokatalyse oder elektrochemische Reaktionen ist, vorzugsweise zur Brennstoffherstellung oder bei Brennstoffzellanwendungen, oder als eine Elektrode in einer Solarzelle, Brennstoffzelle, Elektrolyseur, Batterie, Kondensator oder Superkondensator.

15. Elektronische Vorrichtung, wie eine Solarzelle, eine Brennstoffzelle, ein Elektrolyseur, eine Batterie, ein Kondensator oder ein Superkondensator, umfassend eine leitfähige Folie nach Anspruch 12 oder 13.

## Revendications

1. Procédé de fabrication d'une feuille conductrice, le procédé comprenant les étapes consistant à
- fournir des microparticules comprenant un polymère conducteur d'électrons hydrophile ;
- fournir un matériau fibreux comprenant une fibre hydrophile ;
- former une composition liquide comprenant les microparticules et le matériau fibreux ; et
- drainer le liquide de la composition liquide, formant ainsi une couche conductrice comprenant le polymère conducteur d'électrons et le matériau fibreux.

2. Procédé selon la revendication 1, dans lequel le matériau fibreux est conducteur d'électrons.

3. Procédé selon la revendication 1 ou 2, dans lequel le matériau fibreux comprend des fibres conductrices d'électrons, telles que des fibres de carbone, de Cu, de Ti, de Ni, d'acier et/ou d'acier inoxydable, de préférence des fibres de carbone.

4. Procédé selon l'une quelconque des revendications précédentes, dans lequel le matériau fibreux comprend des fibres de cellulose, telles que de la pâte cellulosique, de la pâte de bois, de la pâte à papier ou de la cellulose micro-fibrillée.

5. Procédé selon l'une quelconque des revendications précédentes, dans lequel la composition liquide comprend en outre des nanofibres.

6. Procédé selon l'une quelconque des revendications précédentes, dans lequel la composition liquide est une composition aqueuse et le liquide drainé de la composition liquide comprend de l'eau.

7. Procédé selon l'une quelconque des revendications précédentes, dans lequel le liquide est drainé de la composition liquide à travers un filtre ayant une taille d'ouverture de 10 à 1000 µm, de préférence de 100 à 1000 µm, plus préférablement de 100 à 500 µm ou de 500 à 1000 µm, le filtre étant éventuellement une toile métallique, de préférence un fil métallique d'une machine à papier.

8. Procédé selon l'une quelconque des revendications précédentes, dans lequel les microparticules ont une taille moyenne de particule supérieure à 10 µm, de préférence supérieure à 50 µm, plus préférablement supérieure à 100 µm, le plus préférablement supérieure à 200 µm.

9. Procédé selon l'une quelconque des revendications précédentes, dans lequel la couche conductrice a une conductivité d'au moins 10 S/cm, de préférence d'au moins 20 S/cm, plus préférablement d'au moins 50 S/cm, plus préférablement d'au moins 100 S/cm, plus préférablement d'au moins 200 S/cm, plus préférablement au moins 300 S/cm, plus préférablement au moins 500 S/cm, le plus préférablement d'au moins 700 S/cm, et dans lequel de manière facultative la couche conductrice a une conductivité de pas plus de 1000 S/cm.

10. Procédé selon l'une quelconque des revendications précédentes, dans lequel la couche conductrice a une capacité spécifique d'au moins 10 F/g, de préférence d'au moins 100 F/g, plus préférablement d'au moins 300 F/g, plus préférablement d'au moins 500 F/g, le plus préférablement d'au moins 700 F/g, et dans lequel de manière facultative la couche conductrice a une capacité spécifique de pas plus de 1000 F/g.

11. Procédé selon l'une quelconque des revendications précédentes, dans lequel le polymère conducteur d'électrons est la polyaniline, le polythiophène, le polypyrrole, le polyphénylène-vinylène, le polyfurane et/ou leurs dérivés ou combinaisons, de préférence le poly(3,4-éthylènedioxythiophène).

12. Feuille conductrice comprenant une couche conductrice, la couche conductrice comprenant un matériau fibreux et des microparticules, le matériau fibreux comprenant une fibre hydrophile et les microparticules comprenant un polymère conducteur d'électrons hydrophile, de préférence dans laquelle la couche conductrice est définie comme dans l'une quelconque des revendications 9 à 10, le polymère conducteur d'électrons est défini comme dans la revendication 11, les microparticules sont définies comme dans la revendication 8 et/ou le matériau fibreux est défini comme dans l'une quelconque des revendications 2 à 4.

13. Feuille conductrice selon la revendication 12, pouvant être obtenue par le procédé selon l'une quelconque des revendications 1 à 11.

14. Utilisation d'une feuille conductrice selon la revendication 12 ou 13 comme électrode, de préférence dans laquelle l'électrode est une électrode pour l'électrocatalyse ou des réactions électrochimiques, de préférence pour la production de carburant ou dans des applications de piles à combustible, ou est une électrode dans une cellule solaire, une pile à combustible, un électrolyseur, une batterie, un condensateur ou un super-condensateur.

15. Dispositif électronique, tel qu'une cellule solaire, une pile à combustible, un électrolyseur, une batterie, un condensateur ou un super-condensateur, comprenant une feuille conductrice selon la revendication 12 ou 13.
